# EUROPEAN PATENT APPLICATION

(11) **EP 1 289 240 A1**
(43) Date of publication of application: **05.03.2003**
(21) Application number: 01306720.2
(22) Date of filing: 07.08.2001
(51) Int. Cl.: H04M 3/42, H04Q 7/32

(54) **Telecommunication user apparatus for and methods of sending, receiving and communicating voice data**

(71) Applicant: LUCENT TECHNOLOGIES INC., Murray Hill, New Jersey 07974-0636 (US)
(72) Inventor: Packham, Sarah Louise, Chippenham, Wiltshire SN15 3EA (GB)
(74) Representative: Sarup, David Alexander

(57) **Abstract**

A first telecommunications user apparatus (2) comprises both a voice data transmitter (10) and means (14) to selectably transmit a control signal indicative of whether a recipient's voice recording apparatus is desired.

A second telecommunications user apparatus (8) comprises a voice data receiver (18) connected to voice recording apparatus (20) and a voice aural output device (22) . The second user apparatus (8) also comprises means (18) to direct the received voice data to the voice recording apparatus dependent upon receipt of the control signal indicating that voice recording apparatus (20) is desired by a sender.

## Description

### Technical Field

The present invention relates to telecommunications user apparatus, telecommunications apparatus including telecommunications user apparatus, and methods of sending, receiving and communicating voice data.

### Background

Text messaging has become increasingly popular in the last few years. The reason for this predominantly being because it is quick and easy to use. When time is short it allows a user to communicate without delay, and without having to interrupt what else the user is doing, for example so as to respond to unanticipated queries which the message recipient might raise if say an interactive voice call were made instead.

### Summary of the Invention

The present invention provides a telecommunications user apparatus comprising a voice data transmitter and means to selectably transmit a control signal indicative of whether a recipient's voice recording apparatus is desired.

The present invention in its preferred embodiments thus provides an alternative to text messaging. In the preferred embodiments, voice messages are sent directly to a receiving person's answerphone without the sender having to speak to the receiving person. This is simpler and easier than typing a text message, and yet the user would still be able to communicate the same information. The present invention in its preferred embodiments could thus challenge the popularity of text messaging, and has benefits of speed. Being simpler than text messaging, the present invention in its preferred embodiments might be attractive to more and different users.

Preferably the control signal is transmitted together with other call set-up information, such as dialed digits.

Preferably the telecommunications user apparatus is a handset, preferably a mobile handset.

Preferably the means to selectably transmit a control signal comprises a button switch for the user to manually press to indicate that a recipient's voice recording apparatus is desired. In the preferred embodiments this button allows a similar function to text messaging in an easy manner.

The present invention also provides a telecommunications user apparatus comprising a voice data receiver connected to voice recording apparatus and a voice aural output device, the user apparatus comprising means to direct the received voice data to the voice recording apparatus dependent upon receipt of a control signal indicating that voice recording apparatus is desired by a sender.

Preferably the telecommunications user apparatus is a handset, preferably a mobile handset.

The voice recording apparatus is preferably an answerphone. Alternatively, the voice recording apparatus is preferably a voice mail server remote from the telecommunications user apparatus.

The present invention also provides telecommunications apparatus comprising first and second telecommunications user apparatus, the first telecommunications user apparatus comprising a voice data transmitter and means to selectably transmit a control signal indicative of whether a second user's voice recording apparatus is desired, the second telecommunications user apparatus comprising a voice data receiver, connected to voice recording apparatus and a voice aural output device, the second telecommunications user apparatus further comprising means to direct the received voice data to the voice recording apparatus dependent on receipt of the control signal indicating that the voice recording apparatus is desired by the first user.

Preferably the first and second telecommunications user apparatus reside in different networks and/or service provider domains.

The present invention also provides a method of sending voice data from a telecommunications user apparatus including selectably transmitting in association with said voice data a control signal indicative of whether a recipient's voice recording apparatus is desired.

The present invention also provides a method of receiving voice data and a control signal indicating that voice recording apparatus of a telecommunications user apparatus comprising a voice data receiver connected to voice recording apparatus and a voice aural output device is desired by a sender, including directing the received voice data to the voice recording apparatus dependent upon receipt of said control signal.

The present invention also provides a method of communicating voice data over telecommunications apparatus comprising sending voice data from a first telecommunications user apparatus including selectably transmitting in association with said voice data a control signal indicative of whether voice recording apparatus of a second telecommunications apparatus is desired, and
receiving the voice data and the control signal by the second telecommunications user apparatus, the second telecommunications user apparatus comprising a voice data receiver connected to voice recording apparatus and a voice aural output device, and directing the received voice data to the voice recording apparatus dependent upon receipt of the control signal indicating that voice recording apparatus is desired.

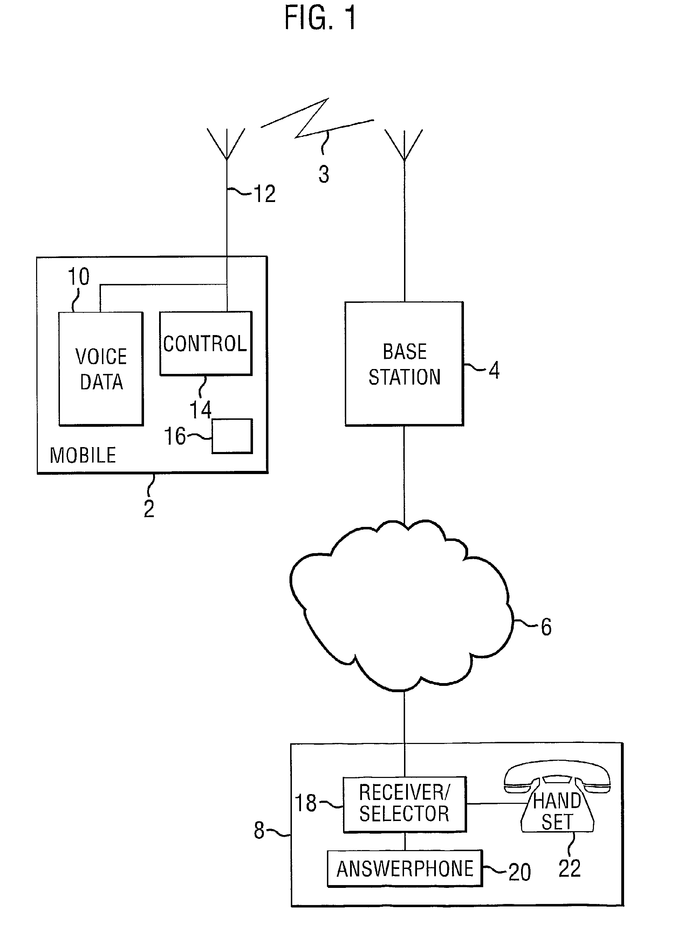

### Brief Description of the Drawing

A preferred embodiment of the present invention will now be described by way of example and with reference to the Figure.

The Figure is a diagrammatic illustration of a first user's mobile handset connected to a second user's receiving equipment.

### Detailed Description

As shown in the Figure, a mobile handset 2 communicates by radio 3 to a base station 4 connected via other telecommunications apparatus 6 to another user's combined telephone/answerphone 8.

The mobile handset 2 includes a voice data transmitter 10 connected to its aerial 12 and also including a control signal transmitter 14. The control signal transmitter 14 acts under the control of a button switch 16 to send a control signal indicating that the recipient's answerphone or voice mail is desired. The control signal is sent together with other call setup signalling such as dialled digits.

The call is made with voice data sent, via the base station 4 and other apparatus 6, to the receiver's telephone/answerphone 8. The telephone/answerphone includes a telephone handset 22 including a loudspeaker (not shown) and an answerphone 20. The telephone/answerphone includes a voice data receiver/selector 18 operative to receive voice data and the control signal indicative of whether the recipient's answerphone is desired, and to direct the voice data to the answerphone 20 dependent on the control signal.

In other embodiments the answerphone 20 is replaced by a remote voice mail apparatus (which can be considered part of the other telecommunications apparatus 6).

## Claims

1. A telecommunications user apparatus comprising a voice data transmitter (10) and means (14) to selectably transmit a control signal indicative of whether a recipient's voice recording apparatus is desired.

2. A telecommunications user apparatus according to claim 1, in which the control signal is transmitted together with other call set up information, such as dialed digits.

3. A telecommunications user apparatus according to claim 1 or claim 2, in which the telecommunications user apparatus is a mobile handset (2).

4. A telecommunications user apparatus according to any preceding claim, in which the means to selectably transmit a control signal comprises a button switch (16) for the user to manually press to indicate that a recipient's voice recording apparatus is desired.

5. A telecommunications user apparatus (8) comprising a voice data receiver connected to voice recording apparatus (20) and a voice aural output device (22), the user apparatus comprising means (18) to direct the received voice data to the voice recording apparatus dependent upon receipt of a control signal indicating that voice recording apparatus is desired by a sender.

6. A telecommunications user apparatus according to claim 5, in which the telecommunications user apparatus is a mobile handset.

7. A telecommunications user apparatus according to claim 5 or claim 6, in which the voice recording apparatus is an answerphone.

8. A telecommunications user apparatus according to claim 5 or claim 6, in which the voice recording apparatus is a voice mail server remote from the telecommunications user apparatus.

9. Telecommunications apparatus comprising first (2) and second (8) telecommunications user apparatus, the first telecommunications user apparatus comprising a voice data transmitter (10) and means (14) to selectably transmit a control signal indicative of whether a second user's voice recording apparatus is desired, the second telecommunications user apparatus (8) comprising a voice data receiver (18), connected to voice recording apparatus (20) and a voice aural output device (22), the second telecommunications user apparatus further comprising means to direct the received voice data to the voice recording apparatus (20) dependent on receipt of the control signal indicating that the voice recording apparatus is desired by the first user.

10. Telecommunications apparatus according to claim 9, in which the first and second telecommunications user apparatus reside in different networks and/or or service provider domains.

11. A method of sending voice data (10) from a telecommunications user apparatus (2) including selectably transmitting in association with said voice data a control signal (14) indicative of whether a recipient's voice recording apparatus is desired.

12. A method of receiving voice data and a control signal indicating that voice recording apparatus (20) of a telecommunications user apparatus (8) comprising a voice data receiver (18) connected to voice recording apparatus (20) and a voice aural output device (22) is desired by a sender, including directing the received voice data to the voice recording apparatus dependent upon receipt of said control signal.

13. A method of communicating voice data over telecommunications apparatus comprising
sending voice data (10) from a first telecommunications user apparatus including selectably transmitting in association with said voice data a control signal (14) indicative of whether voice recording apparatus (20) of a second telecommunications apparatus (8) is desired, and
receiving the voice data and the control signal by the second telecommunications user apparatus (8), the second telecommunications user apparatus comprising a voice data receiver (18) connected to voice recording apparatus (20) and a voice aural output device (22), and directing the received voice data to the voice recording apparatus dependent upon receipt of the control signal indicating that voice recording apparatus is desired.
